# DEMANDE DE BREVET EUROPEEN

(11) **EP 0 669 418 A1**
(43) Date de publication de la demande: **30.08.1995**
(21) Numéro de dépôt: 95420035.8
(22) Date de dépôt: 16.02.1995
(51) Int. Cl.: D06M 15/564, D06M 15/333, D06M 15/227, D06M 11/72, D06M 11/70, D06N 3/14, D06N 3/00, C03C 25/02

(54) **Tissu ignifuge à claire-voie**

(30) Priorité: 23.02.1994 FR 9402299
(71) Demandeur: HEXCEL Société Anonyme:, F-69608 Villeurbanne Cedex (FR)
(72) Inventeur: Forin, Roger, F-74600 Seynod (FR); Martinet, Annick, F-69500 Bron (FR); Chapot, Annie, F-73410 Novalaise (FR)
(74) Mandataire: Fleurance, Raphael

(57) **Abrégé**

La présente invention concerne un tissu ignifuge à claire-voie qui est très résistant au feu (Mₒ), qui ait un comportement non toxique, non corrosif en combustion et qui présente un aspect translucide. Pour satisfaire à ces spécifications, entre autres, ce tissu screen est caractérisé en ce qu'il est exempt d'halogène et en ce qu'il comprend un revêtement ignifugeant à base d'au moins un agent ignifugeant et d'au moins un liant polymère, ledit revêtement représentant une proportion inférieure ou égale à 30, de préférence à 25 et, plus préférentiellement encore à 10 % en poids sec, par rapport à la masse totale du tissu.

L'invention a également pour objet le procédé d'obtention dudit tissu ainsi qu'un store réalisé à partir de ce dernier.

Application : tissu technique ameublement/bâtiment.

## Description

La présente invention relève du domaine des matériaux tissés ou non, ignifuges et destinés à être utilisés, par exemple, comme matériaux d'ameublement ou pour la réalisation de revêtements muraux ou de sol, de rideaux ou de stores intérieurs ou extérieurs ou bien encore de tout autre article analogue.

Plus particulièrement, l'invention concerne un tissu ignifuge à claire-voie, c'est-à-dire se présentant sous la forme d'un treillis ajouré, de sorte qu'il soit apte à former écran à la lumière - notamment dans le cadre de l'application store, ou rideau - sans toutefois être complètement opaque, de manière à pouvoir autoriser une certaine vision par transparence.

La présente invention a également pour objet un procédé d'obtention d'un tel tissu ignifuge à claire-voie.

Etant donné les domaines d'application potentiels de ce type de tissu, à savoir, notamment, le bâtiment et l'ameublement, il est clair que les normes de sécurité en particulier d'ininflammabilité exigées, sont de la plus haute importance dans le cahier des charges propre à de tels matériaux.

L'ignifugation de ces tissus à claire-voie repose généralement sur l'enduction des fils élémentaires utilisés comme matières premières ou du support fibreux fini, à l'aide de compositions d'ignifugation. Classiquement, ces dernières comprennent des polymères halogénés, en particulier de type polychlorure de vinyle ainsi qu'un ou plusieurs ignifugeants pouvant être halogénés (e.g. bromés).

Les halogènes sont d'excellents retardateurs de flamme mais ils souffrent néanmoins d'un inconvénient majeur. On sait, en effet, qu'ils sont à l'origine de l'émission de gaz toxiques et corrosifs, lorsqu'ils sont soumis au feu. Ainsi, ces émanations contiennent e.g. de l'acide chlorhydrique, dans le cas où l'on est en présence d'un liant polymère de type polychlorure de vinyle. Ces effets secondaires nocifs du feu peuvent avoir des conséquences au moins aussi graves que celles provoquées par le feu en lui-même.

On connaît ainsi une étoffe enduite ignifuge ajourée, divulguée par la demande de brevet français **N° 2 617 205.** Cette étoffe est formée de fils dont l'âme de vinylal est recouverte d'une gaine de polychlorure de vinyle (PVC) plastifié et ignifugé, à l'aide de dérivés halogénés. On retrouve dans cette étoffe tous les inconvénients liés à l'emploi de polymères (PVC) et d'agents ignifugeants halogénés, qui posent de sérieux problèmes de sécurité.

En outre, il convient de noter que la fabrication de telles étoffes ajourées ignifuges est relativement peu économique et peu commode à mettre en oeuvre. En effet, le gainage des fils est une opération supplémentaire nécessitant des moyens techniques particuliers, entraînant un accroissement de la durée du procédé ainsi que la consommation d'importantes quantités de compositions ignifugeantes de gainage. Par ailleurs, le gainage limite, en pratique, la variété des natures de fil dont on peut disposer pour l'élaboration d'articles textiles à claire-voie. Il n'est, en effet, pas concevable de fabriquer, par avance, des fils gainés ignifuges de différents diamètres et/ou coloris, (e.g.), en raison de la lourdeur et du coût de cette opération de gainage.

De plus, cette dernière peut affecter les fils dans leurs propriétés mécaniques, notamment de souplesse, ce qui peut s'avérer gênant lors du tissage. Un autre inconvénient de ce phénomène se traduit par l'impossibilité ou la difficulté de contrôler la souplesse de l'article textile considéré, en vue de l'adapter à l'application visée.

Il faut souligner également que ces tissus ajourés ignifuges ne sont pas des plus satisfaisants, en ce qui concerne la propriété infroissabilité et le maintien de la cohésion du réseau tissé. Ce dernier défaut se traduit par des problèmes d'effilochage indésirables de ce type de tissu.

S'agissant de leur résistance au feu, on observe que ces tissus connus ajourés, réalisés à partir de fils gainés à l'aide d'une composition de PVC ignifugeante, satisfont à la norme d'ininflammabilité de classe M₁ (NF-P-92503), mais possède toujours, des pouvoirs calorifiques encore très élevés, cela ne lui permet pas d'accéder à la norme Mₒ (NF-P-92510). Or, il se trouve qu'une telle norme de sécurité incendie, est de plus en plus fréquemment exigée dans le domaine du bâtiment. Il s'agit donc là d'une lacune notable de ces tissus ajourés ignifuges connus.

Dans cet état de la technique, l'un des objectifs essentiel de la présente invention est de fournir un tissu ignifuge à claire-voie, qui satisfasse aux contraintes :
- de très haute résistance au feu (classement Mₒ),
- d'absence de caractère secondaire toxique, agressif ou corrosif,
- et d'ajourage suffisant pour pouvoir procurer une certaine translucidité et transparence.

Un autre objectif de l'invention est de fournir un tissu ignifuge à claire-voie qui soit économique, infroissable, agréable au toucher et à propriétés mécaniques, (notamment de souplesse) appropriées.

Un autre objectif de l'invention est de fournir un tissu ignifuge à claire-voie qui présente une stabilité à la lumière, une stabilité dimensionnelle et une cohésion suffisante du réseau tissé pour éviter les phénomènes d'effilochage.

Ces objectifs, parmi d'autres, sont atteints par la présente invention qui concerne un tissu ignifuge à claire-voie caractérisé en ce qu'il est exempt d'halogène et en ce qu'il comprend un revêtement ignifugeant à base d'au moins un agent ignifugeant et d'au moins un liant polymère, ledit revêtement représentant une proportion inférieure ou égale à 30, de préférence à 25 et, plus préférentiellement encore à 10 % en poids sec, par rapport à la masse totale du tissu.

Il est du mérite de la Demanderesse d'être parvenue à élaborer un tissu ignifuge à claire-voie, également dénommé communément tissu "Screen", qui est liberé des inconvénients liés à la présence d'halogène et à leurs effets pervers en combustion et ce, sans sacrifier aux performances d'ininflammabilité puisque celles-ci restent de niveau M₁. Mais mieux encore, le tissu satisfait de surcroît à la norme Mₒ, correspondant aux seuils réglementaires les plus bas, en matière d'énergie calorifique de combustion.

L'une des difficultés dans cette démarche fut de préserver la structure à claire-voie recherchée. Cela supposait, notamment, de ne pas avoir recours à des quantités trop exorbitantes de revêtement ignifugé, sachant que celles-ci doivent, néanmoins, rester suffisantes pour assurer un comportement optimum, en ce qui concerne la résistance au feu.

La présente invention constitue l'illustration d'une solution apportée à ce dilemme.

Le tissu "Screen", selon l'invention, présente, par ailleurs, les caractéristiques traditionnellement attendues pour ce genre d'articles textiles, à savoir : infroissabilité, translucidité, transparence, toucher agréable, stabilité à la lumière et stabilité dimensionnelle et structurelle. Sur ce dernier point, il convient d'ajouter que les faisceaux de fils, qui constituent les éléments de chaîne et de trame du tissu sont parfaitement cohésifs, ce qui évite les problèmes d'effilochage constatés pour certains tissus connus de ce genre.

On peut également observer que les quantités relativement faibles de revêtement ignifugé contenues dans ce tissu "Screen", sont un atout quant au respect de l'intégrité des propriétés mécaniques des fils textiles employés du tissu, de même qu'au regard de ses caractéristiques économiques.

Le tissu selon l'invention est un tissu technique. Les matières premières fibreuses, à considérer dans le cadre de ladite invention, sont donc avantageusement des fibres techniques qui, pour un même tissu, peuvent être de nature identique ou différente. Il peut être, en effet, intéressant, dans certains cas, de combiner les caractéristiques de diverses matières fibreuses afin d'optimiser les performances du tissu.

Les fibres techniques envisageables peuvent, par exemple, être choisies parmi les matériaux suivants : polymères synthétiques, e.g. : *aramide, polyester ou analogue*, carbone, silice, verre ou similaire, ce dernier matériau étant plus particulièrement préféré.

Une autre caractéristique du tissu ignifuge à claire-voie de l'invention, est, bien entendu, la part que représente la surface ajourée (i.e. les vides ou les trous) par rapport à la surface totale du tissu. Pour satisfaire à la spécification de translucidité, ladite surface ajourée équivaut avantageusement à au moins un, de préférence au moins trois et, plus préférentiellement encore, au moins 4,5 % de la surface totale du tissu.

Conformément à une disposition avantageuse de l'invention, le revêtement ignifugeant est formé par au moins une couche d'enduction appliquée sur au moins une des faces du tissu. Une telle disposition participe au maintien de la cohésion du réseau tissé et procure une qualité tactile et un aspect visuel tout à fait corrects.

La sélection de l'ignifugeant compris dans le revêtement d'enduction du tissu de l'invention, n'est pas le fruit d'une démarche naturelle et évidente, puisque cet ignifugeant doit être compatible avec le liant polymère et coopérer avec lui pour conférer au revêtement ignifugeant les propriétés attendues et visées ci-dessus. Il s'ensuit que, selon une modalité préférée de réalisation de l'invention, l'ignifugeant est choisi parmi les composés contenant du phosphore et/ou de l'azote. Il peut s'agir, par exemple, de composés azotés du phosphore tels que l'orthophosphate diammonique ou bien encore les polyphosphates d'ammonium.

Il va de soi que l'ignifugeant peut être constitué d'une seule espèce moléculaire (e.g.) azote/phosphore ou d'un mélange de plusieurs espèces différentes.

Avantageusement, l'ignifugeant retenu est de nature telle qu'il n'ait pas tendance à la reprise en eau et qu'il soit thermostable.

En pratique, et sans que cela ne soit limitatif, le produit commercialisé sous la dénomination "**FLACAVON**" s'est avéré être particulièrement approprié en tant qu'ignifugeant, susceptible d'être compris dans la composition du revêtement d'ignifugation du tissu "Screen" selon l'invention.

S'agissant du liant polymère, il est avantageusement sélectionné parmi les copolymères polyoléfiniques et, plus préférentiellement encore, parmi les copolymères éthylène/acétate de vinyle.

Selon une variante de l'invention, ces copolymères polyoléfiniques peuvent être éventuellement associés à ou remplacés par des polyuréthanes, de préférence de type aliphatique. On peut ainsi mettre, par exemple, en oeuvre un liant formé d'un mélange de polyuréthane (PU) et de copolymères éthylène acétate de vinyle (EVA) dont les proportions PU : EVA, exprimées en parties en poids sur sec, sont les suivantes :

| | |
|---|---|
| | 10 : 100 à 90 : 100 |
| de préférence | 32 : 100 à 80 : 100 |
| et plus préférentiellement encore | 35 : 100 à 65 : 100. |

En définitive, le revêtement d'ignifugation que l'on utilise de façon privilégiée dans le tissu "Screen", selon l'invention, est défini par la composition suivante (en % en poids sur sec) :
- liant polymère : 60 à 99 %, de préférence 70 à 90 %, et plus préférentiellement encore de 75 à 85 %
- Agent ignifugeant : 1 à 40 %, de préférence : 10 à 30 %, et plus préférentiellement encore 15 à 25 %.

Il va de soi que l'invention ne se limite pas à la composition décrite ci-dessus. Au contraire, il est parfaitement envisageable de lui adjoindre différents additifs connus et appropriés en eux-mêmes. A titre d'exemple, on peut citer les composés anti-tacking ou anti-adhésif, les pigments.

Selon un autre de ces aspects, l'invention concerne un procédé d'obtention du tissu "Screen" tel que décrit ci-dessus.

Ce procédé consiste essentiellement à enduire au moins une des faces du tissu à claire-voie, constitué par des fibres techniques non halogénées, de préférence en verre, à l'aide d'une composition ignifugeante comprenant au moins un agent ignifuge et au moins un liant polymère.

L'agent ignifugeant et le liant polymère sont, par exemple, du type de ceux décrits ci-dessus.

En pratique, on réalise donc tout d'abord le mélange des divers constituants de la composition ignifugeante, dans les proportions voulues et dans un milieu solvant et/ou de dispersion, de préférence aqueux. Le dispersant plus particulièrement préféré est l'eau pure.

La viscosité de la dispersion et/ou solution comprenant la composition ignifugeante, constitue un paramètre important du procédé d'enduction du tissu à claire-voie selon l'invention. Il est clair, en effet, qu'une fois appliquée sur le tissu à claire-voie, la dispersion et/ou solution ignifugeante a tendance à boucher tous les orifices dudit tissu. Il convient donc de sélectionner une gamme de viscosité de solution et/ou de dispersion telle, qu'elle permette le décolmatage aisé des vides du tissu à claire-voie.

Ainsi, conformément à une disposition avantageuse de l'invention, cette viscosité est choisie de telle sorte que, in fine, la surface ajourée du tissu enduit représente au moins 1, de préférence au moins 3 et, plus préférentiellement encore, au moins 4,5 % de la surface totale.

Avantageusement, la viscosité convenable pour la composition d'ignifugation selon l'invention est inférieure ou égale à 30 Pa.s, de préférence de 20 Pa.s et, plus préférentiellement encore, comprise entre 5 et 15 Pa.s.

En pratique, l'enduction est réalisée :
- par passage en plein bain de la composition ignifugeante en solution et/ou dispersion,
- par calandrage,
- ou par enduction par cadre rotatif,

conformément aux techniques classiques connues dans le domaine considéré.

Cette étape d'application du revêtement ignifugeant liquide est suivie d'une étape de débouchage des orifices du tissu à claire-voie, en faisant passer, au moins une fois, le tissu ainsi enduit sur au moins un cylindre sec, permettant de décolmater en recueillant l'excès de revêtement par effet de succion ou d'essorage.

A la suite des étapes et de décolmatage, il convient de procéder à l'élimination au moins partielle du solvant de la dispersion et/ou solution. De manière conventionnelle non limitative, cette élimination s'opère par toute technique de séchage appropriée (four tunnel à température élevée, par exemple).

De façon connue, il peut être prévu une étape de pigmentation du tissu à claire-voie, qui peut être effectuée avant, après ou en même temps que l'enduction.

Pour plus de détails sur le procédé d'enduction et le dispositif utile pour sa mise en oeuvre, on peut se référer au brevet français N° **47 914** du 8 Novembre 1966.

Conformément à l'invention, il est possible d'appliquer une ou plusieurs couches d'enduction ignifugeantes sur une ou sur les deux faces du tissus à claire-voie traité.

Les produits obtenus présentent tous les avantages souhaités à savoir :
- ininflammabilité et pouvoir calorifique de niveau Mₒ,
- infroissabilité,
- translucidité,
- toucher agréable,
- stabilité à la lumière,
- stabilité dimensionnelle,
- structure tissu revêtement cohésive, non sujette à l'effilochage.

Selon un autre de ces aspects, l'invention peut également concerner la composition ou le revêtement ignifugeant défini ci-dessus en tant que tel.

Parmi toutes les applications possibles de l'invention, on peut citer notamment tous les tissus techniques utilisés, par exemple, dans l'ameublement ou dans le bâtiment : rideaux, stores, revêtements, etc...

L'exemple qui suit permettra de mieux comprendre l'invention et de faire ressortir tous ces avantages ainsi que ses variantes de réalisation.

### EXEMPLE

Le présent exemple décrit l'obtention de tissu ignifuge à claire-voie, revêtu sur chacune de ses faces d'un revêtement ignifugeant conforme à l'invention.

### - 1 - Tissu

Le tissu mis en oeuvre est réalisé à partir de fil en fibres de verre de 34 tex. Le tissage est réalisé selon une armure "fausse gaze" en utilisant un faisceau de trois fils pour chaque élément de chaîne et pour l'élément de trame.

Pour un premier lot T₁, on a recours à une contexture de 20 fils par cm, ce qui équivaut, in fine, à un pourcentage de surface ouverte = 5,4 % par rapport à la surface totale du tissu.

On fabrique également un tissu T₂ de contexture = 14 fils/cm soit 12,4 % de surface ouverte par rapport à la surface totale.

### - 2 - Composition d'ignifugation

On procède à la préparation d'une dispersion aqueuse en mélangeant de façon homogène :
- 79 parties en poids sec de copolymère d'éthylène/acétate de vinyle (EVA) de type "**VINOFAN**", commercialisé par la Société BASF,
- 21 parties en poids sec d'un ignifugeant à base de phosphore de type **FLACAVON**, commercialisé par la Société SCHILL & SEILACHER,

L'ajustement de la viscosité par la teneur en eau a été réalisée de manière à obtenir une dispersion d'enduction présentant une viscosité Brookfield de l'ordre 10 Pa.s mesurée sur un viscosimètre Brookfield avec un module L = 3 et une vitesse V = 60 t/min.

### - 3 - Enduction

Les tissus T₁ et T₂ sont plongés dans des pleins bains de la composition d'ignifugation préparée comme décrit ci-dessus. Le dispositif mis en oeuvre, à cette fin, comprend des cylindres d'enrobage, d'essorage et de débouchage sur lesquels le tissu "Screen" est destiné à circuler. Une fois ces orifices (ou ces jours) débouchés, le tissu "Screen" est séché dans un four tunnel à une température de 160°C.

D'autres détails sur le procédé et dispositif d'enduction sont donnés dans le brevet français **N° 47 914** mentionné ci-dessus.

Les tissus "Screen" T₁ et T₂ obtenus comportent un revêtement ignifuge sur chacune de leur face, ce qui correspond à des quantités respectives de 12 et 10 % en poids par rapport à la masse totale du tissu ignifuge à claire-voie considéré.

Pour T₁, la surface d'ajourage est de 5,4 %, tandis que pour T₂ elle est de 12,4 % par rapport à la surface totale.

### - 4 - Résultats

**4.1.** Les tissus "Screen" ignifuge T₁ et T₂ obtenus sont soumis au test défini par la norme NF-P-92503 avec brûleur électrique, ainsi qu'au test de pouvoir calorifique dont le protocole est donné par la norme NF-P-92510. On vérifie par ces tests que les tissus T₁ et T₂ sont Mₒ, donc très résistant au feu et ayant un faible pouvoir calorifique à la combustion.
**4.2.** On mesure la stabilité à la lumière T₁ et T₂ enduits. L'appareillage mis en oeuvre est un dispositif de type Xénotest ou Suntest. La méthodologie mise en oeuvre est la suivante :
   l'échantillon à contrôler est placé pendant 300 heures sous une lampe à Arc Xénon (dans le Suntest). Au terme de cette exposition, on réalise une notation à l'aide de "l'échelle des bleus".
   Cette échelle, bien connue dans le domaine technique considéré, s'étend de 0 à 8. Un échantillon est considéré comme possédant une stabilité à la lumière correcte si la notation qu'on peut lui affecter est supérieure ou égale à 7.
   T₁ et T₂ ont obtenus une note de 7/8 exprimant leur grande stabilité à la lumière.
**4.3.** On apprécie sur le plan subjectif l'infroissabilité des échantillons T₁ et T₂. Et il s'avère, qu'après froissage, ceux-ci retrouvent rapidement leur état initial et ne présentent pas de marque de pliure rémanentes que l'on peut oberver par transparence.
**4.4.** A titre de comparaison, on a soumis aux mêmes tests un échantillon de tissu "Screen" en fibre de verre réalisé à partir de fil gainé PVC.

On mesure que la masse de PVC présente dans ce tissu "Screen" connu s'élève à 65 %. Cela nuit à l'économie de ce produit ainsi qu'à ces caractéristiques mécaniques et à sa translucidité.

Il apparaît, par ailleurs, qu'il est seulement caractérisé par une résistance au feu M₁ sans satisfaire à la norme Mₒ.

En outre, il n'est pas très stable à la lumière (note = 5/8), et conserve des marques de pliure après froissage.

On constate donc, qu'outre sa nature halogénée pénalisante, ce produit de l'art antérieur est d'une qualité moins satisfaisante, que celle qui caractérise les tissus ignifuges à claire-voie conformes à l'invention.

## Revendications

**1 -** Tissu ignifuge à claire-voie caractérisé en ce qu'il est exempt d'halogène et en ce qu'il comprend un revêtement ignifugeant à base d'au moins un agent ignifugeant et d'au moins un liant polymère, ledit revêtement représentant une proportion inférieure ou égale à 30, de préférence à 25 et, plus préférentiellement encore à 10 % en poids sec, par rapport à la masse totale du tissu.

**2 -** Tissu selon la revendication 1, caractérisé en ce qu'il est constitué par des fils en fibres techniques de nature identique ou différente et choisies parmi les matériaux suivants : polymères synthétiques, carbone, verre ou analogues, ce dernier matériau étant préféré.

**3 -** Tissu selon la revendication 1 ou la revendication 2, caractérisé par une surface ajourée équivalent à au moins 1, de préférence au moins 3 et, plus préférentiellement encore au moins 4,5 % de la surface totale du tissu.

**4 -** Tissu selon l'une quelconque des revendications 1 à 3, caractérisé en ce que le revêtement ignifugeant est formé par au moins une couche d'enduction appliquée sur au moins une des faces du tissu.

**5 -** Tissu selon l'une quelconque des revendications 1 à 4 caractérisé en ce que l'ignifugeant est choisi parmi les composés contenant du phosphore et/ou de l'azote.

**6 -** Tissu selon l'une quelconque des revendications 1 à 5, caractérisé en ce que le liant polymère est sélectionné parmi les copolymères éthylène/acétate de vinyle (EVA) et/ou les polyuréthanes.

**7 -** Tissu selon l'une quelconque des revendications 1 à 6, caractérisé en ce que le revêtement ignifugeant possède la composition suivante (en % en poids sur sec) :
- liant polymère : 60 à 99 %, de préférence 70 à 90 %, et plus préférentiellement encore de 75 à 85 %
- Agent ignifugeant : 1 à 40 %, de préférence : 10 à 30 %, et plus préférentiellement encore 15 à 25 %.

**8 -** Procédé d'obtention du tissu selon l'une quelconque des revendications 1 à 7, caractérisé en ce qu'il consiste essentiellement à enduire au moins une des faces du tissu à claire-voie - constitué par des fibres techniques non halogénées, de préférence en verre - à l'aide d'une composition ignifugeante comprenant au moins un agent ignifuge et au moins un liant polymère.

**9 -** Procédé selon la revendication 8, caractérisé en ce que l'on met en oeuvre une composition ignifugeante, se présentant sous la forme d'une dispersion et/ou solution dans un solvant, de préférence aqueux et possédant une viscosité choisie de telle sorte que la surface ajourée du tissu fini représente au moins 1, de préférence au moins 3, et plus préférentiellement encore au moins 4,5 % de la surface totale,
et en ce que, une fois la composition appliquée sur le tissu, on élimine au moins partiellement le solvant, de préférence par séchage.

**10 -** Procédé selon la revendication 8 ou la revendication 9, caractérisé en ce que l'enduction est réalisée par passage en plein bain de la composition ignifugeante, par calandrage, ou par enduction par cadre rotatif, le tissu ainsi enduit étant ensuite soumis à au moins un passage sur au moins un cylindre sec de façon à déboucher les ajourages du tissu.

**11 -** Store caractérisé en ce qu'il est réalisé à partir du tissu selon l'une quelconque des revendications 1 à 2 ou du tissu obtenu par le procédé selon l'une quelconque des revendications 8 à 10.
